# FASCICULE DE BREVET EUROPEEN

(11) **EP 0 608 939 B1**
(45) Date de publication et mention de la délivrance du brevet: **26.04.2006**
(21) Numéro de dépôt: 94200126.4
(22) Date de dépôt: 19.01.1994
(51) Int. Cl.: C08L 27/16, C08L 101/00

(54) **Compositions polymériques destinées à la fabrication de tuyaux pour le transport d'hydrocarbures et articles à base de ces compositions**
Polymerzusammensetzungen für die Herstellung von Rohren zum Transport von Kohlenwasserstoffen, sowie Gegenstände auf der Basis dieser Zusammensetzungen
Polymer compositions for the production of pipes which transport hydrocarbons as well as articles based on these compositions

(30) Priorité: 25.01.1993 BE 9300069
(43) Date de publication de la demande: 03.08.1994
(73) Titulaire: SOLVAY (Société Anonyme), 1050 Bruxelles (BE)
(72) Inventeur: Lasson, Pierre, B-1020 Bruxelles (BE); Lambert, Yves-Julien, B-1325 Chaumont-Gistoux (BE); VanderVeken, Yves, B-3000 Leuven (BE); Maquet, Nestor, B-5406 Waha (BE)
(74) Mandataire: Jacques, Philippe

(56) Documents cités:
- DE-A- 2 442 173
- US-A- 3 538 028

## Description

La présente invention concerne des compositions polymériques particulières à base de polymères fluorés, permettant de produire des tuyaux ou autres articles capables de résister à des conditions d'utilisation extrêmement sévères, telles que celles rencontrées dans l'industrie pétrolière off-shore. Elle concerne également les tuyaux et autres articles façonnés au départ de ces compositions.

L'exploitation de gisement pétroliers situés en mer soumet à des conditions extrêmes les matériaux mis en oeuvre, et en particulier les tuyaux utilisés pour véhiculer les hydrocarbures ainsi extraits. En effet, les hydrocarbures sont généralement transportés à haute température (de l'ordre de 135 °C) et haute pression (par exemple 700 bars). Lors du fonctionnement des installations, il se pose donc des problèmes aigus de résistance mécanique, thermique et chimique des matériaux. D'autres exigences viennent s'y ajouter avant ou après le service : ainsi, lors de leur installation ou de leur enlèvement (débobinage-bobinage), les tuyaux peuvent subir des chocs, auxquels ils doivent résister jusqu'à des températures fort basses (par exemple - 35 °C) et des déformations importantes. Une déformabilité d'au moins 7 % est considérée comme nécessaire pour permettre un (dé)bobinage non-préjudiciable aux tuyaux. Enfin, il importe que les propriétés des tuyaux se maintiennent quasi-constantes au fil du temps, afin de leur assurer une longue durée de vie et éventuellement d'en permettre la réutilisation.

Pour tenter de faire face à toutes ces exigences à court terme et à long terme, divers types de tuyaux ont déjà été proposés, comprenant généralement un ou plusieurs éléments métalliques garantissant la rigidité mécanique, par exemple un ruban d'acier spiralé, ainsi que diverses couches à base de compositions polymériques, assurant notamment l'étanchéité et le blindage thermique. Ces compositions polymériques peuvent par exemple être à base de polyéthylène, mais ce choix limite la température d'utilisation des tuyaux à moins de 100 °C. Elle peuvent également être à base de polymères fluorés tels que le PVDF (polyfluorure de vinylidène), ce qui en relève la température maximale d'utilisation et leur confère une excellente résistance chimique. Toutefois le PVDF est fort rigide et doit donc être plastifié, ce qui pose alors le problème de l'extraction des plastifiants par les hydrocarbures transportés, qui risque de conduire progressivement à une perte des propriétés avantageuses apportées par la plastification, limitant ainsi la durée de vie des tuyaux et leur réutilisation.

Enfin, des exigences supplémentaires apparaissent lorsqu'on envisage la fabrication des tuyaux en question. Ainsi, il est évidemment désirable que l'ouvrabilité des compositions polymériques soit aussi bonne que possible, et que celles-ci soient donc d'une viscosité modérée. Toutefois, dans le cas de tuyaux comportant un ruban d'acier spiralé, il est souhaitable que la réalisation d'un revêtement polymérique en contact avec ce ruban spiralé ne soit pas trop perturbée par la présence d'interstices entre les spires. En effet, lors de la fabrication des tuyaux, il peut se produire dans ces interstices des projections de résine ("sagging") constituant des inhomogénéités et donc des amorces de rupture potentielles. A cet effet, il est préférable que la composition utilisée n'ait pas une viscosité trop faible.

Ainsi, dans la demande de brevet EP 166.385 (FURUKAWA ELECTRIC Co. Ltd.), on propose une solution qui remédie à certains de ces problèmes. Ce document décrit un tuyau multi-couches de structure particulière, pouvant notamment être utilisé dans l'industrie pétrolière, comprenant entre autres un ruban d'acier spiralé et une couche adjacente constituée d'une composition polymérique de propriétés spécifiées, à base d'un copolymère de PVDF. Un copolymère obtenu à partir de VF₂ (fluorure de vinylidène) contenant de 5 à 10 % (molaires) d'HFP (hexafluoropropylène) est recommandé, car il améliore la flexibilité des tuyaux ainsi constitués. Aucune attention n'est cependant prêtée aux propriétés mécaniques à basse température. Pour éviter que les interstices entre les spires métalliques ne posent les problèmes décrits ci-dessus ("sagging"), on recommande en outre de prévoir une couche supplémentaire de ruban plastique entre les spires métalliques et la couche polymérique susmentionnée.

Dans le brevet belge 832.851 (DYNAMIT NOBEL A.G.), qui concerne également un mélange PVDF - copolymère (élastomérique) fluoré (par exemple VF₂-HFP), pour lui conférer une résilience et un allongement à la rupture élevés sans en affecter excessivement la résistance à la chaleur (le point Vicat), on recommande fortement de réticuler l'élastomère, et éventuellement d'ensuite recuire les articles ainsi produits. Ces opérations requièrent naturellement l'usage d'additifs spéciaux (agents de réticulation, accélérateurs de vulcanisation) et des étapes de fabrication supplémentaires. On déconseille en outre dans ce document de dépasser une teneur en poids de copolymère de plus de 30 %.

La présente invention vise à fournir une composition polymérique aux propriétés mécaniques améliorées aux températures basses et élevées, qui conserve en cours d'utilisation une flexibilité et une résilience suffisantes dans la plage de températures de service, et dispense en outre de l'usage d'une couche supplémentaire de ruban plastique destinée à éviter le "sagging" ainsi que du recours à la réticulation.

En l'occurrence, l'invention concerne des compositions polymériques à base de PVDF homopolymère et de copolymère(s) fluoré(s), comprenant, en poids :
(A) environ de 60 à 80 % d'au moins un PVDF homopolymère;
(B) environ de 20 à 40 % d'au moins un copolymère thermoplastique du fluorure de vinylidène (VF₂) et d'au moins un autre monomère fluoré, présent dans ce copolymère dans des proportions pondérales d'environ 5 à 20 %;
(C) environ de 5 à 20 % [par rapport au poids total des polymères (A) et (B)] d'au moins un plastifiant monomère ou polymère.

De manière plus précise, les compositions de l'invention comprennent un mélange de polymères du VF₂ qui contient, en poids :
(a) au moins un PVDF homopolymère (A), dans des proportions d'au moins environ 60 %, de préférence d'au moins 65 %, et ne dépassant pas environ 80 %, de préférence 75 %; et
(b) au moins un copolymère thermoplastique (B) du VF₂ et d'au moins un autre monomère fluoré (comonomère), cet autre monomère étant présent dans ce copolymère en des proportions pondérales d'au moins environ 5 %, de préférence d'au moins 8 %, et ne dépassant pas environ 25 %, de préférence 20 %, de manière particulièrement préférée 16 %. Des comonomères fluorés donnant de très bons résultats sont l'HFP (hexafluoropropylène) et le CTFE (chlorotrifluoroéthylène). L'HFP donne d'excellents résultats. Le TrFE (trifluoroéthylène) est également utilisable. La teneur pondérale des compositions en ce copolymère (B) est d'au moins environ 20 %, de préférence d'au moins 25 %, et ne dépassant pas environ 40 %, de préférence 35 %; ainsi que
(c) au moins un plastifiant (C), en des proportions d'environ 5 à 20 %. Toutes ces proportions sont exprimées par rapport au poids total des polymères (A) et (B).

Grâce à l'incorporation selon l'invention du copolymère (B) et du plastifiant (C) à l'homopolymère (A) on observe un effet de plastification permanente aux températures ambiantes et supérieures, et d'autre part une amélioration des propriétés mécaniques aux basses températures. A cette fin, il est indispensable que le copolymère (B) soit thermoplastique (c'est-à-dire, du moins dans le présent contexte, semi-cristallin), et non élastomérique. Par copolymère "élastomérique", on entend désigner, comme défini par l'ASTM dans la Special Technical Publication n° 184, un matériau pouvant être étiré, à la température ambiante, à deux fois sa longueur initiale et qui, une fois relâché, reprend rapidement sa longueur initiale, à 10 % près. Bien qu'il puisse paraître surprenant que l'addition d'un copolymère thermoplastique conduise à une meilleure plastification que l'addition d'un copolymère élastomérique, les exemples donnés ci-après confirment que seule l'utilisation d'un copolymère (B) thermoplastique induit un effet de plastification significatif, contrairement à l'utilisation d'un copolymère élastomérique du VF₂. On observe ainsi qu'un copolymère élastomérique de ce type est immiscible avec le PVDF, ne conduit qu'à l'amélioration de la résistance aux chocs et donne un système biphasique (nodules de copolymère au sein d'une matrice d'homopolymère rigide). Les compositions selon l'invention, au contraire, peuvent être considérés comme le résultat d'une cocristallisation, et sont monophasiques. Un avantage inattendu et particulièrement important d'un tel mélange d'homopolymère (A) et de copolymère (B) est qu'il présente un effet synergique par rapport à un simple copolymère en ce qui concerne sa température de fusion et sa résistance au fluage à haute température (reflétée par exemple par son point Vicat). Il apparaît, en effet, que la température de fusion est nettement plus élevée dans le cas d'une composition selon l'invention que dans celui d'un copolymère seul, à teneur globale en comonomère égale.

Une condition supplémentaire que doit de préférence remplir le copolymère thermoplastique (B) décrit ci-dessus concerne sa masse moléculaire ou, de manière plus commode, son indice de fluidité.

Le copolymère (B) de la composition selon l'invention a de préférence un indice de fluidité (MFI mesurés à 230 °C sous 10 kg) inférieur à environ 6 g/10 min, idéalement inférieur à 5.5 g/10 min. Cette limite supérieure est souhaitable, car il apparaît qu'une viscosité trop faible s'accompagne d'un relèvement de la température de fragilisation. La limite inférieure, quant à elle, n'est pas critique et a pour seul but d'améliorer l'ouvrabilité des compositions : en général, on choisit des copolymères (B) dont le MFI est d'au moins environ 4 g/10 min. Pour cette même raison d'ouvrabilité, on utilise généralement des homopolymères dont le MFI (dans les mêmes conditions) est d'au moins environ 0.5 g/10 min. En fait, le MFI de l'homopolymère utilisé dans une composition de l'invention se choisit essentiellement en fonction du MFI dù copolymère et des proportions relatives de ces deux types de polymères, de façon telle que le MFI de la composition ne dépasse pas de préférence environ 1 g/10 min (dans les conditions de mesure mentionnées ci-dessus).

L'adjonction au mélange homopolymère-copolymère thermoplastique d'un plastifiant "basse température" approprié, en des proportions généralement d'au moins environ 5 % [par rapport au poids total des polymères (A) et (B), c'est-à-dire plus de 5 kg de plastifiant par 100 kg de matière polymérique non-plastifiée], de préférence d'au moins 8 %, et ne dépassant pas environ 20 %, de préférence 15 %, permet d'améliorer le comportement des compositions aux basses températures. Une proportion de plastifiant d'environ 10 % donne des résultats très satisfaisants. Un plastifiant qui s'est révélé particulièrement avantageux dans le cadre de la présente invention est le DBS (sébaçate de dibutyle : C₄H₉-COO-(CH₂)₈-COO-C₄H₉). Des plastifiants performants sont également les polyesters polymériques tels que ceux dérivés des acides adipique, azélaïque ou sébacique et de diols, et leurs mélanges, à condition toutefois que leur masse moléculaire soit d'au moins environ 1500, de préférence d'au moins 1800, et ne dépassant pas environ 5000, de préférence inférieure à 2500. Des polyesters de masse moléculaire trop élevée conduisent en effet à des compositions de moindre résistance au choc.

Le DBS et les polyesters précités s'incorporent sans difficulté aux mélanges de polymères fluorés (A) et (B) définis précédemment, et conduisent à des compositions dont la résistance au choc est satisfaisante.

On a par ailleurs constaté que les compositions de l'invention résistent nettement mieux à la déplastification qu'un simple homopolymère plastifié.

Les compositions de l'invention peuvent en outre contenir des additifs conventionnels tels que matières de charge, pigments, renforts fibreux, particules conductrices de l'électricité, etc.

Les compositions de l'invention peuvent être obtenues par toutes les techniques habituelles de préparation de compositions polymériques, notamment par'mélange préalable des différents polymères à l'état de poudres ou de granules (ainsi qu'éventuellement avec les autres additifs ou matières de charge), dans les proportions souhaitées, avant de les soumettre à une technique de mise en oeuvre thermomécanique telle que l'extrusion, l'injection, etc.

Ce mode opératoire peut être appliqué soit en vue de fabriquer des produits finis tels que par exemple des tuyaux, soit, en y ajoutant une étape de granulation, en vue de disposer de granules contenant les polymères, additifs et charges souhaités dans les proportions convenables, ce qui facilite une transformation subséquente en produits finis.

Pour les raisons exposées ci-dessus, les compositions selon l'invention se révèlent particulièrement appropriées à la fabrication, notamment par extrusion, de tuyaux soumis à des conditions d'utilisation sévères, en particulier de tuyaux destinés à véhiculer des hydrocarbures chauds sous pression, mais ceci ne représente que l'une de leur applications potentielles, d'autres articles fabriqués à partir de ces compositions faisant tout autant l'objet de la présente invention que des tuyaux.

La présente invention vise également à fournir des tuyaux et autres articles à plusieurs couches, dont l'une au moins est constituée d'une composition conforme à l'invention. De tels articles multi-couches peuvent être fabriqués par de nombreuses techniques connues, telle la coextrusion.

### Exemples

Les exemples dont la description suit servent à illustrer l'invention. Les essais 12, 13 et 15 sont réalisés selon l'invention.

### Exemples 1R à 7R - Plastification de PVDF homopolymère

Dans les exemples 2R à 4R, des échantillons de PVDF homopolymère (SOLEF ® 1010) ont été plastifiés par trois plastifiants différents, chaque fois présents dans des proportions pondérales 10:90 par rapport au PVDF (DOS = sébaçate de dioctyle; BBSA = sulfonamide de butylbenzène). L'exemple 1R concerne le même PVDF homopolymère non-plastifié. On a chaque fois mesuré les élongations au seuil d'écoulement (Ee) et à la rupture (Er) à différentes températures (à une vitesse de 5 mm/min, selon la norme ASTM D 638), la résistance à l'impact IZOD (mesuré selon la norme ASTM D 256, à - 35 °C), ainsi que les températures de transition vitreuse (Tg) et de fusion (Tf) [mesurées respectivement par DMTA (dynamic-mechanical thermal analysis) et calorimétrie DSC (differential scanning calorimetry)]. Sauf indication contraire, ces mêmes méthodes de mesure seront également utilisées dans les autres exemples.

**TABLEAU 1**

| Exemples | 1R | 2R | 3R | 4R |
|---|---|---|---|---|
| Plastifiant | - | DBS | DOS | BBSA |
| Ee à - 35 °C, % | - | (*) | 4 | 9 |
| Ee à 23 °C, % | 7 | (*) | 4 | 11 |
| Er à - 35 °C, % | 10 (°) | 26 | 5 | 14 |
| Rés. impact IZOD, J/m | 49 (°) | 106 | 78 | 73 |
| Tg, °C | - 32 | - 31 | - 32 | - 31 |
| Tf, °C | 174 | 170 | 172 | 168 |

| | | | | |
|---|---|---|---|---|
| (*) pas de seuil d'écoulement dans ce cas | | | | |
| (°) mesurés à - 40 °C | | | | |

Semblablement, dans les exemples 5R à 7R, on a plastifié le même PVDF homopolymère par trois polyesters dérivés de l'acide adipique de masses moléculaires différentes (MM), également présents dans des proportions 10:90, et fait les mêmes mesures :

**TABLEAU 2**

| Exemples | 1R | 5R | 6R | 7R |
|---|---|---|---|---|
| MM du polyester | - | 2050 | 2270 | 3000 |
| Ee à - 35 °C, % | - | 6 | 5 | 6 |
| Ee à 23 °C, % | 7 | 11 | 8 | 10 |
| Er à - 35 °C, % | 10 (*) | 16 | 14 | 22 |
| Rés. IZOD à - 35 °C, J/m | 49 (*) | 78 | 70 | 48 (*) |
| Tg, °C | - 32 | - 29 | - 28 | - 32 |
| Tf, °C | 174 | 173 | 171 | 173 |

| | | | | |
|---|---|---|---|---|
| (*) mesuré à - 40 °C | | | | |

L'examen du tableau 2 fait apparaître l'intérêt d'utiliser des polyesters de masse moléculaire limitée.

### Exemples 8R à 10R - Tests de miscibilité

La composition 8R est un mélange de copolymère thermoplastique VF₂-HFP (SOLEF 21508) et de PVDF homopolymère (SOLEF 1015) dans des proportions pondérales respectives 30:70 (sans plastifiant). Les compositions 9R et 10R comprennent, d'une part, un PVDF homopolymère (SOLEF 1010) et, d'autre part, un copolymère à base de VF₂ et d'HFP (commercialisé par du Pont sous la marque VITON ®). Ce copolymère VITON, élastomérique et non thermoplastique comme selon la présente invention, et dont deux types différents ont été utilisés (essais 9R et 10R), est chaque fois présent dans des proportions pondérales de 25:75 par rapport à l'homopolymère; ces trois compositions (8R, 9R, 10R) présentent ainsi chacune des proportions comparables de copolymère.

**TABLEAU 3**

| Exemple | 8R | 9R | 10R |
|---|---|---|---|
| Copolymères VITON | non | A | B70 |
| Ee à 23 °C, % | 13 | 6 | 8 |
| Er à 23 °C, % | 410 | 19 | 37 |
| Tg, °C | - 30 | - 31/- 13 - | 30/- 17 |

Dans les données du tableau 3, la comparaison des élongations à la rupture (Er) traduit la décohésion des compositions 9R et 10R (hétérogènes), et la bonne cohésion de la composition 8R (homogène), qui serait conforme à l'invention si elle comprenait un plastifiant.

Des microphotographies TEM (microscopie électronique par transmission) réalisées avec des grossissements de 2000 X et 10000 X confirment d'alleurs l'immiscibilité de l'homopolymère avec les copolymères dans les cas ou ces derniers sont élastomériques (exemples 9R et 10R) (on observe dans ce cas la présence de nodules d'environ 1 µm de diamètre), ainsi que la bonne miscibilité (absence de nodules) dans le cas contraire (exemple 8R).

Des essais DSC ont, par ailleurs, révélé pour la composition de l'exemple 8R la présence d'un seul pic de fusion et d'un seul pic de cristallisation, ce qui confirme la parfaite miscibilité (co-cristallisation) de l'homopolymère et du copolymère thermoplastique.

Les deux valeurs de Tg indiquées pour les exemples 9R et 10R dans le tableau précédent confirment la présence de deux phases, dont les Tg sont distinctes.

### Exemples 11R à 13 - Avantages des mélanges homopolymère-copolymère thermoplastique plastifiés sur les simples copolymères

L'exemple comparatif 11R correspond à un copolymère thermoplastique VF₂-HFP (SOLEF 11010) contenant 10 % en poids d'HFP, et les exemples 12 et 13 à des compositions selon l'invention, contenant du PVDF homopolymère (SOLEF 1015), un copolymère thermoplastique VF₂-HFP (SOLEF 11012) et un plastifiant, dans des proportions pondérales respectives 70:30:10. Le point Vicat a été mesuré selon la norme ASTM D-1525 (sous 5 kg). Le plastifiant utilisé dans l'exemple 13 est un polyester de l'acide adipique d'une masse moléculaire moyenne de 2050, commercialisé par Ciba-Geigy sous la marque RHEOPLEX ® 904.

**TABLEAU 4**

| Exemple | 11R | 12 | 13 |
|---|---|---|---|
| Plastifiant | - | DBS | polyester |
| Ee à - 35 °C, % | - | 9 | 14 |
| Ee à 23 °C, % | 10 | 20 | 18 |
| Tf, °C | 160 | 169 | 170 |
| Tg, °C | - 29 | - 30 | - 29 |
| Point Vicat, °C | 96 | 108 | 111 |

Dans le tableau 4, on constate que, les mélanges homopolymère-copolymère (thermoplastique) plastifiés conduisent à une importante amélioration des propriétés thermo-mécaniques, par rapport à un simple copolymère.

### Exemples 14R et 15 - Avantages des mélanges homopolymère - copolymère thermoplastique plastifiés sur l'homopolymère plastifié

L'exemple comparatif 14R correspond à un PVDF homopolymère (SOLEF 1015) plastifié par 10 % de DBS, et l'exemple 15 (selon l'invention) à une composition PVDF homopolymère (SOLEF 1015) / copolymère thermoplastique VF₂-HFP (SOLEF 11012) / DBS (dans des proportions respectives 70:30:10). Les propriétés suivantes ont été mesurées après une déplastification obtenue par un séjour de 2 heures dans une étuve à 150 °C. Les valeurs Ee et Er ont été mesurées à une vitesse de 50 mm/min selon la norme ASTM D 638.

**TABLEAU 5**

| Exemple | 14R | 15 |
|---|---|---|
| Ee à - 35 °C, % | 5 | 9 |
| Er à - 35 °C, % | 10 | 11 |
| Ee à 23 °C, % | 7 | 10 |
| Er à 23 °C, % | 40 | 259 |

Dans le tableau 5, on constate que la composition 15 (selon l'invention) résiste nettement mieux à la déplastification que l'homopolymère plastifié (14R), et en particulier que l'élongation au seuil d'écoulement (Ee) à - 35 °C est supérieure à 7 %, valeur minimale considérée comme nécessaire pour permettre le (dé)bobinage, comme exposé précédemment.

## Revendications

1. Compositions polymériques à base de PVDF homopolymère et de copolymère(s) fluoré(s), **caractérisées en ce qu'**elles comprennent, en poids,
(A) de 60 à 80 % d'au moins un PVDF homopolymère;
(B) de 20 à 40 % d'au moins un copolymère thermoplastique du fluorure de vinylidène (VF₂) et d'au moins un autre monomère fluoré, présent dans ce copolymère dans des proportions pondérales de 5 à 25 %;
(C) de 5 à 20 % [par rapport au poids total des polymères (A) et (B)] d'un plastifiant monomère ou polymère.

2. Compositions selon la revendication 1, **caractérisées en ce que** le monomère fluoré est choisi parmi l'hexafluoropropylène et chlorotrifluoroéthylène,

3. Compositions selon la revendication 1 ou 2, **caractérisées en ce que** le monomère fluoré est présent en des proportions pondérales ne dépassant pas 20 %.

4. Compositions selon la revendication 3, **caractérisées en ce que** le monomère fluoré est présent en des proportions pondérales ne dépassant pas 16 %.

5. Compositions selon l'une des revendications de 1 à 4, **caractérisées en ce qu'**elle comprend au moins 25 % en poids de copolymère thermoplastique.

6. Compositions selon l'une des revendications de 1 à 5, **caractérisées en ce que** le monomère fluorée est l'hexafluoropropylène.

7. Compositions selon l'une des revendications de 1 à 5, **caractérisées en ce que** le monomère fluorée est le chlorotrifluoroéthylène.

8. Compositions selon l'une des revendications de 1 à 7, dans lesquelles le copolymère présente un indice de fluidité (MFI à 230 °C et sous 10 kg) inférieur à 6 g/10 min.

9. Compositions selon l'une des revendications de 1 à 8, dans lesquelles le plastifiant comprend le sebaçate de dibutyle.

10. Compositions selon l'une des revendications de 1 à 8, dans lesquelles le plastifiant comprend au moins un polyester polymérique de l'acide adipique, de l'acide azélaïque ou de l'acide sébacique et d'un diol, d'une masse moléculaire d'environ 1500 à 5000.

11. Tuyaux comprenant au moins une couche constituée d'une composition selon l'une des revendications 1 à 10.

12. Articles façonnés constitués totalement ou partiellement d'une composition selon l'une des revendications 1 à 10.

## Claims

1. Polymer compositions based on PVDF homopolymer and on fluorocopolymer(s), **characterized in that** they comprise, by weight,
(A) from 60 to 80 % of at least one PVDF homopolymer;
(B) from 20 to 40 % of at least one thermoplastic copolymer of vinylidene fluoride (VF₂) and of at least one other fluoromonomer, present in this copolymer in weight proportions of 5 to 25 %;
(C) from 5 to 20 % [relative to the total weight of the polymers (A) and (B)] of a monomeric or polymeric plasticizer.

2. Compositions according to Claim 1, **characterized in that** the fluoromonomer is chosen among hexafluoropropylene and chlorotrifluoroethylene.

3. Compositions according to Claim 1 or 2, **characterized in that** the fluoromonomer is present in weight proportions not exceeding 20 %.

4. Compositions according to Claim 3, **characterized in that** the fluoromonomer is present in weight proportions not exceeding 16 %.

5. Compositions according to anyone of Claims 1 to 4, **characterized in that** they comprise at least 25 % by weight of thermoplastic copolymer.

6. Compositions according to anyone of Claim 1 to 5, **characterized in that** the fluoromonomer is the hexafluoropropylene.

7. Compositions according to anyone of Claims 1 to 5, **characterized in that** the fluoromonomer is the chlorotrifluoroethylene.

8. Compositions according to anyone of Claims 1 to 7, in which the copolymer exhibits a melt index (MFI at 230°C and under 10 kg) lower than 6 g/10 min.

9. Compositions according to anyone of Claims 1 to 8, in which the plasticizer comprises dibutyl sebacate.

10. Compositions according to anyone of Claims 1 to 8, in which the plasticizer comprises at least one polymeric polyester of adipic acid, of azelaic acid or of sebacic acid and of a diol, with a molecular mass of approximately 1500 to 5000.

11. Pipes including at least one layer consisting of a composition according to one of Claims 1 to 10.

12. Shaped articles consisting totally or partially of a composition according to one of Claims 1 to 10.

## Patentansprüche

1. Polymerzusammensetzungen auf der Basis von PVDF-Homopolymer und eines oder mehrerer Fluorcopolymere, **dadurch gekennzeichnet, dass** sie
(A) 60 bis 80 Gew.% wenigstens eines PVDF-Homopolymers;
(B) 20 bis 40 Gew.% wenigstens eines thermoplastischen Copolymers von Vinylidenfluorid (VF₂) und wenigstens eines anderen Fluormonomers, das in diesem Copolymer in Gewichtsanteilen von 5 bis 25 % vorliegt;
(C) 5 bis 20 Gew.% [bezogen auf das Gesamtgewicht der Polymeren (A) und (B)] eines monomeren oder polymeren Weichmachers
umfassen.

2. Zusammensetzungen nach Anspruch 1, **dadurch gekennzeichnet, dass** das Fluormonomer unter Hexafluorpropylen und Chlortrifluorethylen ausgewählt ist.

3. Zusammensetzungen nach Anspruch 1 oder 2, **dadurch gekennzeichnet, dass** das Fluormonomer in 20 % nicht überschreitenden Gewichtsanteilen zugegen ist.

4. Zusammensetzungen nach Anspruch 3, **dadurch gekennzeichnet, dass** das Fluormonomer in 16 % nicht überschreitenden Gewichtsanteilen zugegen ist.

5. Zusammensetzungen nach einem der Ansprüche 1 bis 4, **dadurch gekennzeichnet, dass** sie wenigstens 25 Gew.% an thermoplastischem Copolymer umfassen.

6. Zusammensetzungen nach einem der Ansprüche 1 bis 5, **dadurch gekennzeichnet, dass** das Fluormonomer Hexafluorpropylen ist.

7. Zusammensetzungen nach einem der Ansprüche 1 bis 5, **dadurch gekennzeichnet, dass** das Fluormonomer Chlortrifluorethylen ist.

8. Zusammensetzungen nach einem der Ansprüche 1 bis 7, worin das Copolymer einen Schmelzflussindex (MFI bei 230 °C und unter 10 kg) von kleiner als 6 g/10 min aufweist.

9. Zusammensetzungen nach einem der Ansprüche 1 bis 8, worin der Weichmacher Dibutylsebacat umfasst.

10. Zusammensetzungen nach einem der Ansprüche 1 bis 8, worin der Weichmacher wenigstens einen polymeren Polyester der Adipinsäure, Azelainsäure oder Sebacinsäure mit einem Diol umfasst und ein Molekulargewicht von ungefähr 1500 bis 5000 aufweist.

11. Rohre, umfassend wenigstens eine Schicht, die aus einer Zusammensetzung nach einem der Ansprüche 1 bis 10 gebildet ist.

12. Geformte Gegenstände, zur Gänze oder teilweise bestehend aus einer Zusammensetzung nach einem der Ansprüche 1 bis 10.
